# EUROPÄISCHE PATENTSCHRIFT

(11) **EP 2 044 578 B1**
(45) Veröffentlichungstag und Bekanntmachung des Hinweises auf die Patenterteilung: **27.07.2016**
(21) Anmeldenummer: 07718520.5
(22) Anmeldetag: 26.06.2007
(51) Int. Cl.: G07C 9/00, H04B 13/00

(54) **VORRICHTUNG ZUR ZUTRITTSKONTROLLE SOWIE SCHREIB- /LESEEINRICHTUNG**
APPARATUS FOR ACCESS CONTROL, AND READ/WRITE DEVICE
DISPOSITF DE CONTRÔLE D'ACCÈS ET DISPOSITIF DE LECTURE ET D'ÉCRITURE

(30) Priorität: 25.07.2006 AT 12652006
(43) Veröffentlichungstag der Anmeldung: 08.04.2009
(60) Teilanmeldung: 11003479.0
(73) Patentinhaber: Evva Sicherheitstechnologie GmbH, 1120 Wien (AT)
(72) Erfinder: ENNE, Reinhard J., 1120 Wien (AT)
(74) Vertreter: Keschmann, Marc
(86) Internationale Anmeldenummer: PCT/AT2007/000315
(87) Internationale Veröffentlichungsnummer: WO 2008/011643

(56) Entgegenhaltungen:
- EP-A- 1 013 517
- EP-A- 1 102 215
- EP-A- 1 239 420
- EP-A1- 1 168 678
- WO-A-00/15931
- WO-A-2005/062236
- DE-A1-102004 044 375
- US-A1- 2005 017 841
- ZIMMERMAN T G: "PERSONAL AREA NETWORKS: NEAR-FIELD INTRABODY COMMUNICATION" IBM SYSTEMS JOURNAL, IBM CORP. ARMONK, NEW YORK, US, Bd. 35, Nr. 3/4, 1996, Seiten 609-617, XP000635090 ISSN: 0018-8670

## Beschreibung

Die vorliegende Erfindung betrifft eine Vorrichtung zur Zutrittskontrolle mit einem ein Sperrglied aufweisenden Schloss, einem Betätigungsglied für das Sperrglied, einem elektronischen Schlüssel, einer Empfangseinheit zum Empfangen von Identifikationsdaten des Schlüssels und einer Auswerteschaltung zur Feststellung der Zutrittsberechtigung auf Grund der empfangenen Identifikationsdaten, wobei die Auswerteschaltung mit dem Betätigungsglied und/oder dem Sperrglied zum wahlweisen Freigeben oder Sperren des Schlosses zusammenwirkt, wobei der elektronische Schlüssel Mittel zur Erzeugung eines kapazitiven Nahfelds aufweist, über welches die Identifikationsdaten ausgesendet werden, und eine Einrichtung zur Einkopplung des kapazitiven Nahfelds an die den Schlüssel tragende Person.

Unter elektronischen Schlüsseln werden nachfolgend unterschiedliche Ausbildungen und insbesondere Karten, Schlüsselanhänger und Kombinationen aus mechanischen und elektronischen Schlüsseln verstanden.

Zutrittskontrollvorrichtungen sind in verschiedensten Ausbildungen bekannt geworden. Beispielsweise sind funkferngesteuerte Schlösser, insbesondere für das Sperren und Freigeben von Autotüren, bekannt, wobei ein mobiler elektronischer Schlüssel vorgesehen ist, der über eine Funkverbindung Identifikationsdaten, gegebenenfalls verschlüsselt, an einen Empfänger des Schlosses sendet. Das Schloss weist eine elektrische Schaltung zum Auswerten, gegebenenfalls Entschlüsseln, der empfangenen Informationen auf, wobei das Schloss betätigt wird, sobald auf Grund der empfangenen Identifikationsdaten die Zutrittsberechtigung festgestellt wurde. Neben derartigen funkferngesteuerten Schlössern existieren auch Zutrittskontrollsysteme, bei denen Transponderschlüssel zum Einsatz gelangen. Zum Betätigen des Schlosses muss der Transponderschlüssel lediglich in die Nähe von wenigen Zentimetern an eine Sende-/Empfangseinheit des Schlosses gebracht werden, wobei die im Transponderschlüssel gespeicherten Identifikationsdaten induktiv ausgelesen werden.

Weiters sind sogenannte "Human Area Networks (HAN)" bekannt geworden, bei welchen für den Datenaustausch zwischen wenigstens zwei elektronischen Einrichtungen die Haut der die elektronische Einrichtung tragenden Person als Übertragungsmedium benutzt wird. Die Datenübertragung erfolgt hierbei nicht über elektromagnetische Wellen oder Licht, sondern über schwache elektrische Felder an der Oberfläche der Haut. Es wird hierbei auch von einem kapazitiven Nahfeld gesprochen, wobei in der Regel ein Sender vorgesehen ist, der ein kapazitives Nahfeld erzeugt und Mittel zur Einkopplung des Nahfelds an die Haut der jeweiligen Person aufweist. Die auf das elektrische Feld aufmodulierten Daten werden in der Folge von einem Empfänger empfangen und entsprechend ausgewertet.

Aus der EP 1 239 420 A1 ist ein Identifikationssystem bekannt geworden, bei welchem ein separates Feld in demjenigen Objekt erzeugt wird, in das ein Benutzer zumindest teilweise gelangen sollte. Es wird ein Feld auf den Benutzer und ein Sekundärfeld in dessen Umgebung kapazitiv gekoppelt. Ein Codegeber, der vom Benutzer getragen wird, erkennt das Sekundärfeld und sendet nur dann sein Codesignal aus, durch das dann eine Berechtigung nachgewiesen wird.

Aus der WO 00/15931 A1 und der EP 1013517 A2 sind elektrische Kommunikationssysteme bekanntgeworden, bei welchen die Datenübertragung zwischen einem elektronischen Kraftfahrzeugschlüssel und einer Sicherheitseinrichtung des Kraftfahrzeugs durch von einem kapazitiven Wechselfeld erzeugte Signale erfolgt.

Die vorliegende Erfindung zielt darauf ab, die Handhabung der Zutrittskontrolle zu vereinfachen und herkömmliche Zutrittskontrollsysteme dahingehend zu verbessern, dass die Sicherheit erhöht wird, die Manipulationsmöglichkeiten für nicht zutrittsberechtigte Personen verringert werden, Fehlbedienungen verhindert werden sowie die Zuverlässigkeit, die Bedienerfreundlichkeit und die Lebensdauer erhöht werden.

Zur Lösung dieser Aufgabe ist die Zutrittskontrollvorrichtung der eingangs genannten Art im Wesentlichen derart gekennzeichnet, dass die Empfangseinheit als vom Schloss und dem Betätigungsglied gesonderte Wand leseeinrichtung ausgebildet ist, die wenigstens zwei Elektroden aufweist und wenigstens eine kapazitive Koppelfläche umfasst, sodass sich bei Berührung der kapazitiven Koppelfläche oder bei Annäherung an die kapazitive Koppelfläche durch die Person ein Wechselstromkreis schließt und ein elektrischer Fluss durch die Empfangseinheit entsteht, der von der Empfangseinheit erfasst werden kann. Dadurch, dass nun die Übermittlung der Identifikationsdaten vom elektronischen Schlüssel zum Schloss mit Hilfe eines kapazitiven Nahfelds erfolgt, muss der elektronische Schlüssel selbst nicht in unmittelbare Nähe zum Empfänger des Schlosses gebracht werden und es bedarf keiner gesonderten Aktivierung des Schlüssels, beispielsweise durch einen Knopfdruck. Vielmehr reicht es aus, wenn der elektronische Schlüssel sich in Körpernähe des jeweiligen Benutzers befindet, beispielsweise in einer Hosentasche, Aktentasche oder dgl., wobei die Aussendung und Übertragung der Identifikationsdaten über ein kapazitives Nahfeld erfolgt, welches vom elektronischen Schlüssel an die Körperoberfläche des jeweiligen Benutzers eingekoppelt wird. Sobald sich die den Schlüssel tragende Person einer kapazitiven Koppelfläche einer Empfangseinheit nähert oder die Koppelfläche bzw. einen mit der Koppelfläche leitend verbundenen Teil berührt, erfolgt die eigentliche Datenübertragung vom Sender des Schlüssels zur Empfangseinheit über das kapazitive Nahfeld, wobei sich ein Wechselstromkreis schließt, der einen elektrischen Fluss durch die Empfangseinheit hervorruft, der von der Empfangseinheit erfasst werden kann. Die Identifikationsdaten können hierbei beispielsweise auf eine vom elektronischen Schlüssel generierte Trägerfrequenz aufmoduliert werden.

Die Bedienerfreundlichkeit der Zutrittskontrolle beim Entsperren eines Schlosses wird somit wesentlich erhöht und es wird überdies sichergestellt, dass eine Datenübertragung lediglich dann erfolgt, wenn die den Schlüssel tragende Person sich der gesonderten Empfangseinheit nähert oder diese berührt, sodass Manipulationsmöglichkeiten durch Dritte nahezu ausgeschlossen sind. Weiters ist durch den Umstand, dass erfindungsgemäß ein niedrig energetisches, kapazitives Nahfeld zur Anwendung gelangt, der Energieverbrauch des Zutrittskontrollsystems äußerst gering, und insbesondere der Stromverbrauch des elektronischen Schlüssels. Insgesamt entstehen auf Grund des kapazitiven Nahfelds äußerst kleine Ströme, die, auch wenn sie über die Haut des Benutzers übertragen werden, völlig unbedenklich für den menschlichen Organismus sind.

Die Nachrüstung bestehender Schlösser wird dadurch erleichtert, dass die Empfangseinheit und ggf. alle für die Auswertung der empfangenen Daten notwendigen Schaltkreise in der vom Schloss gesonderten Empfangeinheit angeordnet sind, sodass das Schloss selbst nicht ausgetauscht werden muss, sofern es sich um ein elektrisch betätigbares Schloss handelt.

Das Vorsehen einer vom Schloss gesonderten Empfangseinheit bringt auch den Vorteil mit sich, dass die Empfangseinheit ohne Rücksicht auf die baulichen Gegebenheiten des Schlosses hinsichtlich einer Optimierung der Handhabung und der Empfangsqualität ausgebildet werden kann. Des Weiteren kann die externe Empfangseinheit, welche beispielsweise als Wandleser ausgebildet sein kann, in einfacher Weise mit weiteren Funktionen ausgestattet werden. Beispielsweise können zusätzliche Identifikations- und Zutrittsberechtigungsüberprüfungen vorgesehen sein, wie etwa Fingerprint-Scanner, Iris-Scanner oder Tastenfelder zur Eingabe von Zutrittscodes. Derartige zusätzliche Überprüfungsmöglichkeiten können als Ersatz für die durch den elektronischen Schlüssel ermöglichte Zutrittskontrolle etwa bei einer Fehlfunktion des Schlüssels vorgesehen sein oder als ergänzende Sicherheitsstufe.

Weiters erleichtert die Ausführung der Empfangseinheit als eine vom Schloss getrennte Einheit die Anbindung der Empfangseinheit an externe und interne Kommunikationsnetze oder an Datenbanken wie beispielsweise Zeiterfassungssysteme und dgl.

Was die Möglichkeiten der konkreten Ausbildung der Empfangseinheit betrifft, so ist erfindungsgemäß vorgesehen, dass die Empfangseinheit wenigstens zwei Elektroden aufweist, die gemeinsam einen Empfangskondensator ausbilden. In der Regel ist es hierbei am vorteilhaftesten, wenn die Elektroden des Empfangskondensators an einer Stelle in der Empfangseinheit angeordnet sind, die von einem Großteil des elektrischen Flusses durchsetzt wird. Der Verlauf des elektrischen Flusses durch die Empfangseinheit hängt von der konkreten baulichen Ausgestaltung der einzelnen Teile der Empfangseinheit, wie beispielsweise des Gehäuses und des Gehäusedeckels ab sowie ebenso von der jeweiligen Einbausituation der Empfangseinheit. Je nach der konkreten Beschaffenheit der Empfangseinheit sowie der Einbausituation entstehen mehr oder weniger starke Streufelder, sodass darauf geachtet werden muss, dass die Elektroden des Empfangskondensators an einer Stelle angeordnet werden, durch welche der elektrische Fluss verläuft, sodass sich ein Wechselstromkreis, beispielsweise über die Wand, in welcher die Empfangseinheit eingebaut ist, und den Boden, zurück zur den elektronischen Schlüssel tragenden Person und den Schlüssel schließt und der Datenaustausch erfolgen kann.

Zum einfachen Öffnen oder Sperren eines Schlosses genügt ein unidirektionaler Datenaustausch vom elektronischen Schlüssel über die Empfangseinheit hin zum Schloss. Gemäß einer bevorzugten Weiterbildung ist jedoch ein bidirektionaler Datenaustausch vorgesehen, wobei eine Sendeeinheit zum Senden von Daten an den elektronischen Schlüssel vorgesehen ist. Ein derartiger Rückkanal von der Sendeeinheit zum Schlüssel kann beispielsweise zu Verschlüsselungszwecken und der Übertragung von zusätzlichen Daten dienen, die in der Folge im Schlüssel abgespeichert werden können und beim nächst folgenden Öffnungsvorgang dem Schloss bzw. der Auswerteschaltung rückübermittelt werden. Die Rückübermittlung derartiger Daten kann beispielsweise auch zu dem Zweck erfolgen, dass derartige Daten von der Empfangseinheit in der Folge an eine zentrale Datenbank oder an personenbezogene Systeme, wie Zeiterfassungssysteme weitergeleitet werden.

Die Sendeeinheit weist bevorzugt Mittel zum Erzeugen eines kapazitiven Nahfelds und zum Einkoppeln des Feldes an die den Schlüssel tragende Person auf. Die Sendeeinheit kann hierbei wiederum wenigstens zwei Elektroden aufweisen, die gemeinsam einen Sendekondensator ausbilden. Dabei kann die Ausbildung derart getroffen sein, dass die Elektroden des Empfangskondensators und die Elektroden des Sendekondensators voneinander unabhängig und getrennt voneinander ausgebildet sind. Mit Vorteil wird die Ausbildung aber so getroffen, dass wenigstens eine der Elektroden des Empfangskondensators zugleich auch eine der Elektroden des Sendekondensators ausbildet. Hierbei kann entweder eine einzige Elektrode zugleich eine Elektrode des Empfangskondensators und eine Elektrode des Sendekondensators darstellen, wobei jeder Kondensator zusätzlich jeweils einen weiteren Kondensator aufweist, oder es können insgesamt nur zwei Elektroden vorgesehen sein, die abwechselnd den Empfangskondensator und den Sendekondensator ausbilden.

Die konkrete Ausgestaltung der Elektroden kann in verschiedenster Weise getroffen werden, wobei eine Ausbildung bevorzugt ist, bei welcher wenigstens eine der Elektroden als leitfähige Folie an einem Bauteil der Empfangseinheit ausgebildet ist. Statt einer leitfähigen Folie kann auch vorgesehen sein, dass wenigstens eine der Elektroden als leitfähige Beschichtung, insbesondere Lackierung, eines Bauteils der Empfangseinheit ausgebildet ist.

Um die Montage der Empfangseinheit zu erleichtern und um eine Ausbildung als Wandleser in einfacher Weise zu ermöglichen ist bevorzugt vorgesehen, dass die Elektroden des Empfangskondensators in einer Elektroinstallationsdose angeordnet oder als Teile derselben ausgebildet sind.

Um eine besonders günstige Anordnung der Elektroden insbesondere innerhalb einer Elektroinstallationsdose zu erreichen, sind verschiedenste Möglichkeiten denkbar. Dabei kann bei einer Wandmontage ein gutes Streuverhalten gegen den Boden bevorzugt dadurch erreicht werden, dass die eine Elektrode des Empfangskondensators in einer Ebene quer zur anderen Elektrode des Empfangskondensators angeordnet ist, wobei den Gegebenheiten einer zylinderförmigen Installationsdose besonders gut Rechnung getragen werden kann, wenn, wie es einer bevorzugten Ausbildung entspricht, die eine Elektrode des Empfangskondensators kreisförmig ausgebildet ist und die andere Elektrode des Empfangskondensators entsprechend einer Teilmantelfläche eines Zylinders mit zur kreisförmigen Elektrode quer angeordneten Achse ausgebildet ist, wobei bevorzugt der Radius des Zylinders dem Radius der kreisförmigen Elektrode im wesentlichen entspricht. Dabei ergibt sich bei Erzielung einer guten Empfangscharakteristik eine besonders kompakte und Platz sparende Ausbildung. Zur Erhöhung der internen Kapazität des Empfangskondensators kann diese Ausbildung bevorzugt derart weitergebildet sein, dass die kreisförmig ausgebildete Elektrode einen innerhalb der Mantelfläche der anderen Elektrode angeordneten und parallel zu dieser gekrümmten Fortsatz trägt.

Für den Fall einer waagrechten Montage der gesonderten Empfangs- bzw. Leseeinheit ist eine Ausbildung bevorzugt, bei welcher die zwei Elektroden des Empfangskondensators parallel zueinander angeordnet sind, wobei besonders bevorzugt die eine der zwei parallel angeordneten Elektroden innerhalb der Parallelprojektion der anderen Elektrode angeordnet ist und bevorzugt eine geringere Fläche aufweist.

Die Empfangseinheit soll wie bereits erwähnt als vom Schloss gesonderte Einheit ausgebildet sein, wobei die Anbindung an das Schloss drahtlos oder mittels eines Kabels erfolgen kann. Die Empfangseinheit kann hierbei bevorzugt gemeinsam mit anderen Bauteilen oder Schaltungen der Schließvorrichtung, wie beispielsweise der Sendeeinheit oder der Auswerteschaltung, zu einer externen Lese- bzw. Schreib-/Leseseinrichtung zusammengefasst sein. Die Auswerteschaltung, welche die Auswertung der vom elektronischen Schlüssel empfangenen Daten hinsichtlich der Zutrittsberechtigung vornimmt, kann hierbei bevorzugt ebenfalls innerhalb der externen Lese- bzw. Schreib-/Leseseinrichtung angeordnet sein, sodass die externe Lese- bzw. Schreib-/Leseseinrichtung alle Komponenten vereinigt, die für die erfindungsgemäße Zutrittskontrolle benötigt werden, sodass eine derartige externe Lese- bzw. Schreib-/Leseseinrichtung nur mehr mit einem konventionellen elektrisch betätigbaren Schloss elektrisch verbunden werden muss. Auf diese Art und Weise wird die Nach- bzw. Aufrüstung bestehender Schlösser wesentlich vereinfacht.

Die Einbindung der Lese- bzw. Schreib-/Leseseinrichtung in andere hausinterne Systeme wird bevorzugt dadurch ermöglicht, dass die Lese- bzw. Schreib-/Leseeinrichtung eine Schnittstelle zum Übertragen von Identifikationsdaten sowie ggf. von Berechtigungsinformationen des elektronischen Schlüssels und Informationen über den Schließ- bzw. Öffnungsvorgang, an externe Einrichtungen, wie beispielsweise Zeiterfassungssysteme und dgl. aufweist.

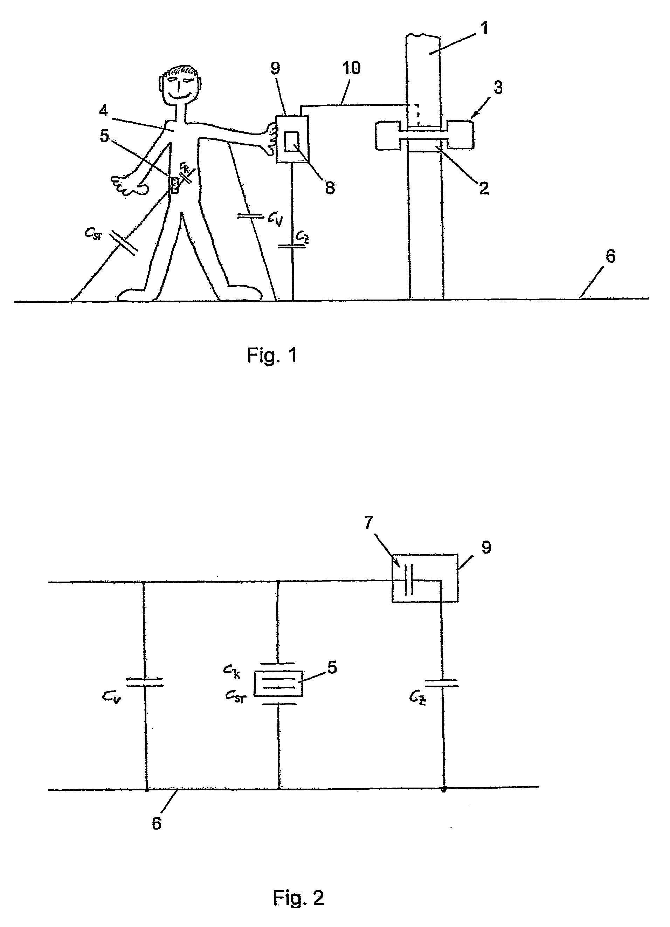

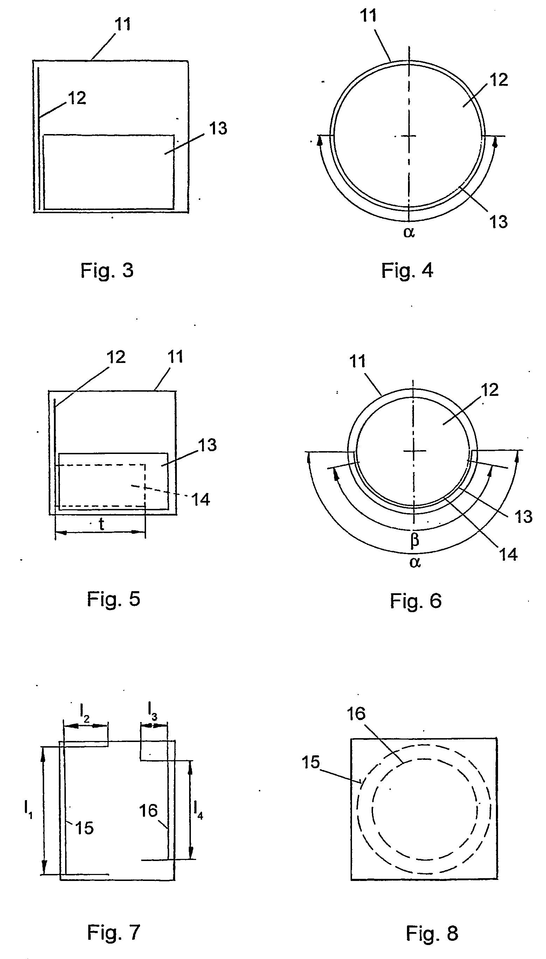

Die Erfindung wird nachfolgend anhand eines in der Zeichnung schematisch dargestellten Ausführungsbeispiels näher erläutert. In dieser zeigen Fig. 1 eine schematische Darstellung der erfindungsgemäßen Zutrittskontrollvorrichtung, Fig. 2 ein vereinfachtes Ersatzschaltbild der Ausbildung gemäß Fig. 1, Fig. 3 und 4 eine schematische Darstellung der vom Schloss gesonderten Empfangseinheit, Fig. 5 und 6 eine abgewandelte Ausbildung der Empfangseinheit und Fig. 7 und 8 eine weitere abgewandelte, nicht erfindungsgemäße Ausbildung der Empfangseinheit.

In Fig. 1 ist schematisch eine Tür mit einer die Tür öffnenden Person sowie die einzelnen Streu-, Verlust- und Koppelkapazitäten dargestellt. Die Tür ist mit 1 bezeichnet und weist ein Schloss 2 mit einem als Knauf ausgebildeten Betätigungsglied 3 auf. Die Person 4 trägt einen elektronischen Schlüssel 5, welcher beispielsweise in einer Hosentasche eingesteckt sein kann. Der elektronische Schlüssel erzeugt hierbei ein kapazitives Nahfeld vorzugsweise mit einer Trägerfrequenz, auf welches Identifikationsdaten aufmoduliert werden. Das kapazitive Nahfeld wird auf die Körperoberfläche der Person 4 eingekoppelt und in der Folge an einen eine Empfangseinheit 8 aufweisenden Wandleser 9 weitergeleitet. Die von der Empfangseinheit empfangenen Daten werden ggf. nach einer Auswertung über eine Leitung 10 an das Schloss 2 übermittelt. Dabei weist der elektronische Schlüssel 5 eine Streukapazität Cₛₜ gegen den Boden 6 auf. Am Übergang zwischen dem elektronischen Schlüssel 5 und der Person 4 ist eine Koppelkapazität Cₖ zu beobachten. Weiters tritt eine Verlustkapazität Cᵥ zwischen der Person 4 und dem Boden 6 auf. Schließlich weist die Empfangseinheit eine Kapazität C_{z} gegen den Boden auf.

Das entsprechende vereinfachte Ersatzschaltbild ist in Fig. 2 dargestellt, wobei wiederum die beschriebenen Kapazitäten angeführt sind. Dabei bildet Cᵥ alle Kapazitäten nach, welche elektrische Flüsse zur Folge haben, welche sich vom Sender nicht über den Empfangskondensator des Empfängers schließen, sondern an diesem vorbeigehen und somit nichts zur Koppelung zwischen Empfänger und Sender beitragen. Cₛₜ bildet die Kapazitäten nach, welche als Summe für die kapazitive Koppelung der Sendebodenelektrode gegen Boden zur Verfügung steht. Cₖ bildet die Kapazitäten nach, welche als Summe für die kapazitive Koppelung der Person 4 zur zweiten Elektrode zur Verfügung steht. C_{z} bildet die Kapazitäten nach, welche als Summe für die kapazitive Koppelung von der Empfangseinheit 8 bzw. dem Wandleser 9 zum Boden zur Verfügung steht. Dabei ist in der Fig.2 der Wandleser wiederum mit 9 bezeichnet und weist einen Empfangskondensator 7 auf. Die Auslegung des Empfangskondensators 7 ist derart zu treffen, dass sich über den Empfangskondensator einerseits ein ausreichender elektrischer Fluss schließt und dass andererseits die Spannung am Kondensator nicht zu klein wird. Ist die Kapazität des Empfangskondensators zu klein, so schließt sich zu wenig elektrischer Fluss über diesen. Allerdings ist auch eine zu große Kapazität des Empfangskondensators in der Art störend, dass die Spannung am Kondensator u=q/c ungünstig klein wird.

In Fig. 3 ist eine Seitenansicht und in Fig. 4 eine Frontalansicht eines zylinderförmigen Wandlesers dargestellt, der beispielsweise in eine Elektroinstallationsdose 11 integriert ist. Innerhalb der Dose 11 ist eine erste Elektrode 12 und eine zweite Elektrode 13 des Empfangskondensators dargestellt. Dabei ist zur Verbesserung des Streuverhaltens gegen den Boden 6 die zweite Elektrode 13 im wesentlichen senkrecht zur kreisförmig ausgebildeten ersten Elektrode 12 angeordnet. Die zweite Elektrode ist hierbei parallel zur zylindrischen Mantelfläche der Dose 11 gekrümmt ausgebildet. Der Umschließungswinkel α kann hierbei in Anpassung an die jeweiligen Bedürfnisse zwischen 0 und 360° gewählt werden. Für die Anpassung der internen Kapazität des Empfangskondensators kann die Elektrode 12 mit einem zusätzlichen Teil 14 ergänzt werden, wie dies in den Fig. 5 und 6 dargestellt ist. Der Fortsatzteil 14 ist hierbei parallel zur Elektrode 13 gekrümmt ausgebildet und kann zu Anpassungszwecken in seiner Tiefe t variiert werden. Auch der Umschließungswinkel β kann variiert werden.

Die Elektroden 12 und 13 können zum Beispiel aus ausreichend leitfähigem Material (z.B. Metalle), ausreichend leitfähiger Folie (z.B. Metallfolie), ausreichend leitfähiger Beschichtung, ausreichend leitfähiger Lackierung oder auf andere Weise gebildet werden.

Die Elektrode 12 kann auch die Stirnfläche des Wandlesers bilden oder auf dieser aufgebracht werden, wie auch die Elektrode 13 durch die Wandleserdose 11, aus Teilen dieser oder auf dieser gebildet werden kann. Die Stirnfläche der Dose 11 kann in bevorzugter Ausformung rund oder auch viereckig sein. Bei Montagen in Elektroinstallationsdosen 11 kann die Elektrode 12 von oder auf einer handelsüblichen Blindabdeckung ausgebildet sein.

Bei der Darstellung gemäß Fig. 7 und 8 ist die Empfangseinheit beispielsweise als nicht zur Erfindung gehörigen Tischlesegerät zur waagrechten Platzierung ausgebildet. Es sind hierbei zwei parallele Elektroden 15 und 16 des Empfangskondensators vorgesehen. Bei dieser Ausführung kann die innere Kapazität des Empfangskondensators besonders gut durch Variierung der Längen l₂ und/oder l₃ vorgenommen werden. Natürlich stehen auch alle in der Elektrotechnik üblichen Mittel zur Anpassung (l₁, l₄, Abstand zwischen Elektrode 15 und 16) zur Verfügung. Das Streuverhalten und Koppelverhalten der Elektroden 15 und 16 zum elektronischen Schlüssel kann je nach Einsatz (Wandleser in Tischmontage, Desktopreader) besonders gut mit den Längen l₁, l₂, l₃, l₄ und dem Elektrodenabstand angepasst werden.

Die in der Dose 11 neben den Elektroden nötige Elektronik kann an den dafür geeigneten Plätzen (zwischen den Elektroden, neben den Elektroden oder vor oder hinter den einzelnen Elektroden) platziert werden.

Insgesamt sind Ausführungen der Lese- bzw. Lese-/Schreibeinheiten als Wandleser bevorzugt:
Der Wandleser ist hierbei für die Wandmontage vorgesehen. Dieser beinhaltet die Elektroden für das Senden und Empfangen, die Readerelektronik, die Auswerteelektronik zur Feststellung der Zutrittsberechtigung sowie ein Freigabeelement wie z.B. ein Relais oder Halbleiterfreigabeelement (MOSFET, Transistor). Optional können auch Signalisierungseinrichtungen wie z.B. LEDs und/oder Summer vorgesehen sein. Die Energieversorgung kann mittels Netzteil oder Batterien erfolgen. Die Auswerteschaltung und das Freigabeelement können auch in einem separaten Gehäuse (z.B. im sicheren Bereich) untergebracht sein.

Der nicht zur erfindung gehörige Desktopreader wird üblicherweise nahe eines Computers montiert oder hingestellt. Seine Aufgabe ist es Daten vom elektronischen Schlüssel an den Computer weiter zu geben und umgekehrt vom Computer an den elektronischen Schlüssel. Der Desktopreader beinhaltet die Elektroden für das Senden und Empfangen, die Readerelektronik sowie erforderlichenfalls eine Elektronik, die eine Datenweitergabe an den Computer ermöglicht. Optional können auch Signalisierungseinrichtungen wie z.B. LEDs und/oder Summer vorgesehen sein. Die Energieversorgung kann mittels Netzteil, vom Computer oder Batterien erfolgen.

Das nicht zur Erfindung gehörige Leseterminal wird meist als Datenausleseeinheit inklusive Weitergabeeinheit eingesetzt. Dabei können die Daten auch über größere Entfernungen, z.B. 1 km, weitergegeben werden. Oft wird das Terminal auch als Schnittstellenumsetzer verwendet. Es werden die Daten an einer Schnittstelle mit einem Gerät so ausgetauscht, dass das für das Gerät maßgebliche Schnittstellenprotokoll voll eingehalten wird. Dabei wird es meist nahe am Gerät oder im Gerät (sofern technisch möglich) montiert. Ein Leseterminal kann, wenn dies benötigt wird, auch Daten auf den elektronischen Schlüssel schreiben.

## Patentansprüche

1. Vorrichtung zur Zutrittskontrolle mit einem ein Sperrglied aufweisenden Schloss, einem Betätigungsglied für das Sperrglied, einem elektronischen Schlüssel, einer Empfangseinheit zum Empfangen von Identifikationsdaten des Schlüssels und einer Auswerteschaltung zur Feststellung der Zutrittsberechtigung auf Grund der empfangenen Identifikationsdaten, wobei die Auswerteschaltung mit dem Betätigungsglied und/oder dem Sperrglied zum wahlweisen Freigeben oder Sperren des Schlosses zusammenwirkt und wobei der elektronische Schlüssel (5) Mittel zur Erzeugung eines kapazitiven Nahfelds aufweist, über welches die Identifikationsdaten ausgesendet werden, und eine Einrichtung zur Einkopplung des kapazitiven Nahfelds an die den Schlüssel tragende Person (4), **dadurch gekennzeichnet, dass** die Empfangseinheit (8) als vom Schloss und dem Betätigungsglied gesonderte Wandleseeinrichtung (9) ausgebildet ist und wenigstens eine kapazitive Koppelfläche umfasst, sodass sich bei Berührung der kapazitiven Koppelfläche oder bei Annäherung an die kapazitive Koppelfläche durch die Person (4) ein Wechselstromkreis schließt und ein elektrischer Fluss durch die Empfangseinheit (8) entsteht, der von der Empfangseinheit (8) erfasst werden kann, wobei die Empfangseinheit wenigstens zwei Elektroden (12, 13) aufweist, die gemeinsam einen Empfangskondensator ausbilden.

2. Vorrichtung nach Anspruch 1, **dadurch gekennzeichnet, dass** weiters eine Sendeeinheit zum Senden von Daten an den elektronischen Schlüssel (5) vorgesehen ist.

3. Vorrichtung nach Anspruch 2, **dadurch gekennzeichnet, dass** die Sendeeinheit Mittel zum Erzeugen eines kapazitiven Nahfelds und zum Einkoppeln des Felds an die den Schlüssel (5) tragende Person (4) aufweist.

4. Vorrichtung nach Anspruch 2 oder 3, **dadurch gekennzeichnet, dass** die Sendeeinheit wenigstens zwei Elektroden aufweist, die gemeinsam einen Sendekondensator ausbilden.

5. Vorrichtung nach einem der Ansprüche 1 bis 4, **dadurch gekennzeichnet, dass** wenigstens eine der Elektroden des Empfangskondensators zugleich eine der Elektroden des Sendekondensators ausbildet.

6. Vorrichtung nach einem der Ansprüche 1 bis 5, **dadurch gekennzeichnet, dass** wenigstens eine der Elektroden als leitfähige Folie an einem Bauteil der Empfangseinheit (8) ausgebildet ist.

7. Vorrichtung nach einem der Ansprüche 1 bis 6, **dadurch gekennzeichnet, dass** wenigstens eine der Elektroden als leitfähige Beschichtung, insbesondere Lackierung, der Empfangseinheit (8) ausgebildet ist.

8. Vorrichtung nach einem der Ansprüche 1 bis 7, **dadurch gekennzeichnet, dass** die Elektroden (12, 13) des Empfangskondensators in einer Elektroinstallationsdose (11) angeordnet oder als Teile derselben ausgebildet sind.

9. Vorrichtung nach einem der Ansprüche 1 bis 8, **dadurch gekennzeichnet, dass** die eine Elektrode (12) des Empfangskondensators in einer Ebene quer zur anderen Elektrode (13) des Empfangskondensators angeordnet ist.

10. Vorrichtung nach einem der Ansprüche 1 bis 9, **dadurch gekennzeichnet, dass** die eine Elektrode (12) des Empfangskondensators kreisförmig ausgebildet ist und die andere Elektrode (13) des Empfangskondensators entsprechend einer Teilmantelfläche eines Zylinders mit zur kreisförmigen Elektrode (12) quer angeordneten Achse ausgebildet ist, wobei bevorzugt der Radius des Zylinders dem Radius der kreisförmigen Elektrode (12) im wesentlichen entspricht.

11. Vorrichtung nach Anspruch 10, **dadurch gekennzeichnet, dass** die kreisförmig ausgebildete Elektrode (12) einen innerhalb der Mantelfläche der anderen Elektrode (13) angeordneten und parallel zu dieser gekrümmten Fortsatz (14) trägt.

12. Vorrichtung nach einem der Ansprüche 1 bis 11, **dadurch gekennzeichnet, dass** die Empfangseinheit (8) und ggf. die Sendeeinheit in einer von dem Schloss (2) gesonderten Lese- bzw. Schreib-/Leseeinrichtung (9) angeordnet ist und mit der Auswerteschaltung drahtlos oder mittels eines Kabels verbunden ist.

13. Vorrichtung nach Anspruch 12, **dadurch gekennzeichnet, dass** die Auswerteschaltung innerhalb der Lese- bzw. Schreib-/Leseeinrichtung (9) angeordnet ist.

14. Vorrichtung nach Anspruch 12 oder 13, **dadurch gekennzeichnet, dass** die Lese- bzw. Schreib-/Leseeinrichtung (9) eine Schnittstelle zum Übertragen von Identifikationsdaten sowie ggf. von Berechtigungsinformationen des elektronischen Schlüssels (5) und Informationen über den Schließ- bzw. Öffnungsvorgang, an externe Einrichtungen, wie beispielsweise Zeiterfassungssysteme und dgl. aufweist.

## Claims

1. An access control device including a lock with a locking element, an actuating element for the locking element, an electronic key, a receiver unit for receiving key identification data and an evaluation circuit for determining access authorization based on the received identification data, said evaluation circuit cooperating with the actuating element and/or the locking element for selectively locking or unlocking the lock, whereby the electronic key (5) comprises means for generating a capacitive near field via which the identification data is emitted, and a device for coupling the capacitive near field to the person (4) carrying the key, **characterized in that** the receiver unit (8) is designed as a wall reader unit (9) separate from the lock and the actuating element and comprises at least one capacitive coupling surface such that, at a contact of the capacitive coupling surface or an approach of the capacitive coupling surface by said person (4), an alternating current circuit is closed and an electric flux is created across the receiver unit (8), which can be detected by the receiver unit (8), wherein the receiver unit comprises at least two electrodes (12, 13) jointly forming a receiver capacitor.

2. A device according to claim 1, **characterized in that** a transmitter unit for transmitting data to the electronic key (5) is further provided.

3. A device according to claim 2, **characterized in that** the transmitter unit comprises means for generating a capacitive near field and for coupling the field to the person (4) carrying the key (5).

4. A device according to claim 2 or 3, **characterized in that** the transmitter unit comprises at least two electrodes jointly forming a transmitter capacitor.

5. A device according to any one of claims 1 to 4, **characterized in that** at least one of the electrodes of the receiver capacitor, at the same time, forms one of the electrodes of the transmitter capacitor.

6. A device according to any one of claims 1 to 5, **characterized in that** at least one of the electrodes is formed as a conductive foil on a component of the receiver unit (8).

7. A device according to any one of claims 1 to 6, **characterized in that** at least one of the electrodes is formed as a conductile coating, in particular varnish, of the receiver unit (8).

8. A device according to any one of claims 1 to 7, **characterized in that** the electrodes (12, 13) of the receiver capacitor are arranged in an electrical installation box (11) or formed as parts of the same.

9. A device according to any one of claims 1 to 8, **characterized in that** one electrode (12) of the receiver capacitor is arranged in a plane transverse to the other electrode (13) of the receiver capacitor.

10. A device according to any one of claims 1 to 9, **characterized in that** one electrode (12) of the receiver capacitor is designed to be circular and the other electrode (13) of the receiver capacitor is designed to have its axis arranged transversely to the circular electrode (12) according to a partial jacket surface of a cylinder, the radius of the cylinder preferably substantially corresponding to the radius of the circular electrode (12).

11. A device according to claim 10, **characterized in that** the circularly designed electrode (12) carries a projection (14) arranged within the jacket surface of the other electrode (13) and curved parallelly with the same.

12. A device according to any one of claims 1 to 11, **characterized in that** the receiver unit (8) and optionally the transmitter unit are arranged in a read or read/write device (9) separate from the lock (2) and connected with the evaluation circuit in a wireless manner or by the aid of a cable.

13. A device according to claim 12, **characterized in that** the evaluation device is arranged within the read or read/write device (9).

14. A device according to claim 12 or 13, **characterized in that** the read or write/read device (9) comprises an interface for transmitting identification data as well as optionally authorization information of the electronic key (5), and information on the closing and/or opening procedures, to external equipment such as, for instance, time detection systems and the like.

## Revendications

1. Dispositif de contrôle d'accès, comprenant une serrure pourvue d'un organe de verrouillage, un élément d'actionnement de l'organe de verrouillage, une clé électronique, une unité de réception pour la réception de données d'identification de la clé et un circuit d'évaluation pour la détermination de l'autorisation d'accès sur la base des données d'identification reçues, le circuit d'évaluation coopérant avec l'élément d'actionnement et/ou l'organe de verrouillage pour la libération ou le verrouillage sélectifs de la serrure, dans lequel la clé électronique (5) présente des moyens pour générer un champ proche capacitif permettant d'émettre les données d'identification, et un dispositif pour le couplage du champ proche capacitif à la personne (4) portant la clé, **caractérisé en ce que** l'unité de réception (8) est réalisée sous forme de dispositif de lecture mural (9) séparé de la serrure et du dispositif d'actionnement et comprend au moins une surface de couplage capacitive de sorte que, lorsque la personne (4) touche la surface de couplage capacitive ou s'approche de la surface de couplage capacitive, un circuit de courant alternatif se ferme et un flux électrique se produit à travers l'unité de réception (8), lequel peut être détecté par l'unité de réception (8), dans lequel l'unité de réception comprend au moins deux électrodes (12, 13) qui forment ensemble un condensateur de réception.

2. Dispositif selon la revendication 1, **caractérisé en ce qu'**est prévue, en outre, une unité d'émission destinée à envoyer des données à la clé électronique (5).

3. Dispositif selon la revendication 2, **caractérisé en ce que** l'unité d'émission présente des moyens pour générer un champ proche capacitif et pour coupler le champ à la personne (4) portant la clé (5).

4. Dispositif selon la revendication 2 ou 3, **caractérisé en ce que** l'unité d'émission présente au moins deux électrodes formant ensemble un condensateur d'émission.

5. Dispositif selon l'une des revendications 1 à 4, **caractérisé en ce qu'**au moins l'une des électrodes du condensateur de réception constitue en même temps l'une des électrodes du condensateur d'émission.

6. Dispositif selon l'une des revendications 1 à 5, **caractérisé en ce qu'**au moins l'une des électrodes est réalisée sous forme de feuille conductrice sur un composant de l'unité de réception (8).

7. Dispositif selon l'une des revendications 1 à 6, **caractérisé en ce qu'**au moins l'une des électrodes est réalisée sous forme de revêtement conducteur, en particulier laquage, de l'unité de réception (8).

8. Dispositif selon l'une des revendications 1 à 7, **caractérisé en ce que** les électrodes (12, 13) du condensateur de réception étant disposées dans un boîtier d'installation électrique (11) ou réalisées en tant qu'éléments de celui-ci.

9. Dispositif selon l'une des revendications 1 à 8, **caractérisé en ce que** l'une (12) des électrodes du condensateur de réception est disposée dans un plan transversal à l'autre électrode (13) du condensateur de réception.

10. Dispositif selon l'une des revendications 1 à 9, **caractérisé en ce que** l'une (12) des électrodes du condensateur de réception est de forme circulaire et l'autre électrode (13) du condensateur de réception est configurée selon une surface d'enveloppe partielle d'un cylindre dont l'axe est disposé transversalement à l'électrode (12) circulaire, le rayon du cylindre correspondant, de préférence, sensiblement au rayon de l'électrode (12) circulaire.

11. Dispositif selon la revendication 10, **caractérisé en ce que** l'électrode (12) de forme circulaire présente un prolongement (14) disposé à l'intérieur de la surface d'enveloppe de l'autre électrode (13) et recourbé de manière parallèle à celle-ci.

12. Dispositif selon l'une des revendications 1 à 11, **caractérisé en ce que** l'unité de réception (8) et, le cas échéant, l'unité d'émission, est disposée dans un dispositif de lecture ou d'écriture/lecture (9) séparé de la serrure (2) et est reliée au circuit d'évaluation sans fil ou par câble.

13. Dispositif selon la revendication 12, **caractérisé en ce que** le circuit d'évaluation est disposé à l'intérieur du dispositif de lecture ou d'écriture/lecture (9).

14. Dispositif selon la revendication 12 ou 13, **caractérisé en ce que** le dispositif de lecture ou d'écriture/lecture (9) présente une interface pour la transmission de données d'identification ainsi que, le cas échéant, d'informations d'autorisation de la clé électronique (5) et d'informations sur le processus de fermeture et/ou d'ouverture, à des dispositifs externes, tels que, par exemple, des dispositifs d'enregistrement du temps et analogues.
